# EUROPEAN PATENT APPLICATION

(11) **EP 4 439 336 A1**
(43) Date of publication of application: **02.10.2024**
(21) Application number: 23802713.0
(22) Date of filing: 28.04.2023
(51) Int. Cl.: G06F 16/74

(54) **VIDEO RECORDING DISPLAY METHOD AND APPARATUS, AND ELECTRONIC DEVICE, MEDIUM AND PROGRAM PRODUCT**

(30) Priority: 12.05.2022 CN 202210521025
(71) Applicant: Beijing Zitiao Network Technology Co., Ltd., Beijing 100190 (CN)
(72) Inventor: SUN, Bo, Beijing 100028 (CN); YU, Zijie, Beijing 100028 (CN)
(74) Representative: Dentons UK and Middle East LLP
(86) International application number: PCT/CN2023/091782
(87) International publication number: WO 2023/216941

(57) **Abstract**

The embodiments of the present disclosure provide a video recording display method and apparatus, and an electronic device, a medium and a program product. The method comprises: receiving a video recording viewing operation; and in response to the video recording viewing operation, displaying a personal recording page of the current user, and displaying, in the personal recording page and according to a recording filming subject, video information of a plurality of first video recordings posted by the current user.

## Description

The present application claims priority of Chinese Patent Application No. 202210521025.0 filed to the Chinese Patent Office on May 12, 2022, the entire contents of the application are incorporated by reference in the present application.

### TECHNICAL FIELD

Embodiments of the present disclosure relate to the field of computer technology, in particular, to a method for presenting a video recording, an apparatus, an electronic device, medium and a program product.

### BACKGROUND

With the rapid development of networks, users can take and post a video recording through applications, and the video recording can be considered to be a record generated in a video form.

However, in the related art, the user needs to search for the posted video recording in a list of posted videos presented on the personal homepage for viewing, and the video recording is viewed in a more complex manner.

### SUMMARY

Embodiments of the present disclosure provide a method for presenting a video recording, an apparatus, an electronic device, a medium and a program product to simplify the viewing manner of the video recording.

An embodiment of the present disclosure provides a method for presenting a video recording, comprising: receiving a video recording viewing operation; in response to the video recording viewing operation, displaying a personal recording page of a current user, and presenting video information of a plurality of first video recordings posted by the current user in the personal recording page according to a recording shooting theme.

An embodiment of the present disclosure further provides an apparatus for presenting a video recording, comprising: a receiving module, configured to receive a video recording viewing operation; a response module, configured to in response to the video recording viewing operation, displaying a personal recording page of a current user, and presenting video information of a plurality of first video recordings posted by the current user in the personal recording page according to a recording shooting theme.

An embodiment of the present disclosure further provides an electronic device, comprising: at least one processor; and a storage communicatively connected with the at least one processor; the storage stores a computer program executable by the at least one processor, the computer program being executed by the at least one processor to enable the at least one processor to perform the method for presenting the video recording according to an embodiment of the present disclosure.

An embodiment of the present disclosure further provides a computer-readable storage medium, storing computer instructions, wherein the computer instructions are used to, when executed by a processor, implement the method for presenting the video recording according to an embodiment of the present disclosure.

An embodiment of the present disclosure further provides a computer program product comprising a computer program, the computer program, when executed by a processor, implements the method for presenting the video recording according to an embodiment of the present disclosure.

### BRIEF DESCRIPTION OF DRAWINGS

FIG. 1 is a flowchart diagram of a method for presenting a video recording according to a first embodiment of the present disclosure;
FIG. 2 is a flowchart diagram of a method for presenting a video recording according to a second embodiment of the present disclosure;
FIG. 3 is a schematic diagram of an interaction scenario according to the second embodiment of the present disclosure;
FIG. 4 is a schematic diagram of a video recording page according to the second embodiment of the present disclosure;
FIG. 5 is a schematic diagram of a personal recording page according to the second embodiment of the present disclosure;
FIG. 6 is a schematic diagram of a personal homepage according to the second embodiment of the present disclosure;
FIG. 7 is a schematic diagram of a video playing page provided by the second embodiment of the present disclosure;
FIG. 8 is a schematic diagram of another video recording page according to the second embodiment of the present disclosure;
FIG. 9 is a schematic diagram of another personal recording page according to the second embodiment of the present disclosure;
FIG. 10 is a block diagram of a structure of an apparatus for presenting a video recording according to a third embodiment of the present disclosure;
FIG. 11 is a structural schematic diagram of an electronic device according to an embodiment of the present disclosure.

### DETAILED DESCRIPTION

Embodiments of the present disclosure are described below with reference to the drawings. Although certain embodiments of the present disclosure are shown in the drawings, it should be understood that the present disclosure may be achieved in various forms and should not be construed as being limited to the embodiments described here. It should be understood that the drawings and the embodiments of the present disclosure are only for exemplary purposes and are not intended to limit the scope of protection of the present disclosure.

It should be understood that various steps recorded in the implementation modes of the method of the present disclosure may be performed according to different orders and/or performed in parallel. In addition, the implementation modes of the method may include additional steps and/or steps omitted or unshown. The scope of the present disclosure is not limited in this aspect.

The term "including" and variations thereof used in this article are open-ended inclusion, namely "including but not limited to". The term "based on" refers to "at least partially based on". The term "one embodiment" means "at least one embodiment"; the term "another embodiment" means "at least one other embodiment"; and the term "some embodiments" means "at least some embodiments". Relevant definitions of other terms may be given in the description hereinafter.

It should be noted that concepts such as "first" and "second" mentioned in the present disclosure are only used to distinguish different apparatuses, modules or units, and are not intended to limit orders or interdependence relationships of functions performed by these apparatuses, modules or units.

It should be noted that modifications of "one" and "more" mentioned in the present disclosure are schematic rather than restrictive, and those skilled in the art should understand that unless otherwise explicitly stated in the context, it should be understood as "one or more".

The names of messages or information interacted between devices in an implementation of the present disclosure are for illustrative purposes only and are not intended to limit the scope of such messages or information.

It can be understood that before using the technical solution disclosed by the plurality of embodiments of the present disclosure, the user should be informed of the type, the use range, the use scenario, and the like of the personal information to which the present disclosure relates and obtain the authorization of the user in an appropriate manner in accordance with the relevant laws and regulations.

For example, in response to receiving the user's active request, prompt information is sent to the user to explicitly prompt the user that the operation that the user requests to perform will require acquisition and use of personal information to the user. Thus, it is possible for the user to autonomously select whether to provide personal information to software or hardware such as an electronic device, an application program, a server, or a storage medium, which performs the operations of the disclosed technical solution, according to the prompt information.

As an alternative but non-limiting implementation, the manner in which the prompt information is sent to the user in response to receiving the user's active request may be, for example, in the form of a pop-up window in which the prompt information may be presented in the form of text. In addition, the pop-up window may also bear a selection control for the user to select "agree" or "disagree" to provide personal information to the electronic device.

It is to be understood that the above-described notification and obtaining user authorization process is merely illustrative and does not constitute a limitation to implementations of the present disclosure, and that other ways of satisfying the relevant laws and regulations may be applied to implementations of the present disclosure.

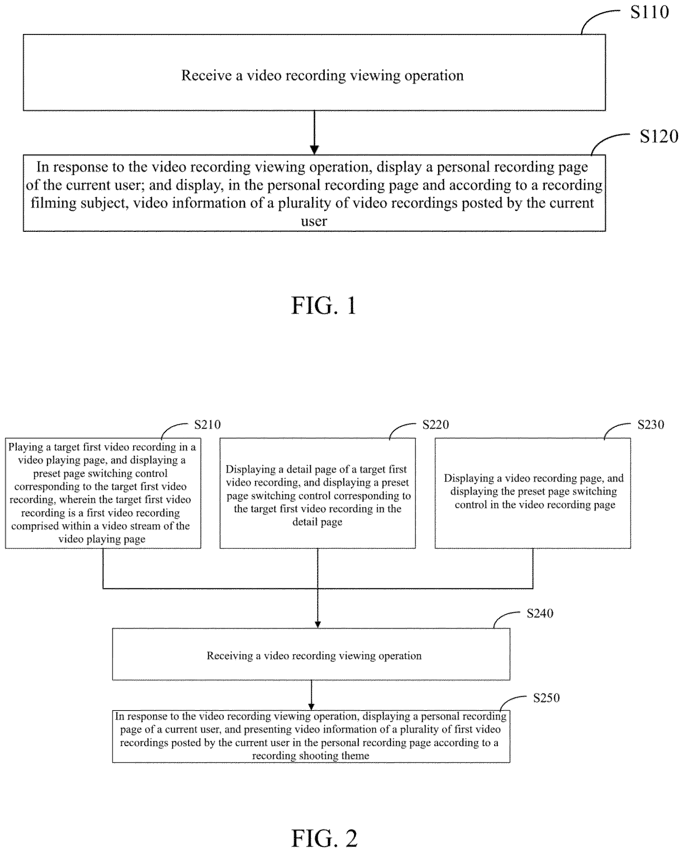

FIG. 1 is a schematic flowchart of a method for presenting a video recording according to a first embodiment of the present disclosure, which is applicable to the case of presenting the video recording, which may be performed by an apparatus for presenting the video recording, in which the apparatus may be implemented by software and/or hardware, and is typically integrated on an electronic device, In this embodiment, the electronic device includes but is not limited to: a computer, a laptop, a tablet, and/or a mobile phone.

As shown in FIG. 1, a first embodiment of the present disclosure provides a method for presenting a video recording, comprising the following steps.

S110, receiving a video recording viewing operation.

The video recording viewing operation may be an operation for viewing a personal video recording of a user, such as an operation that triggers a control in a particular page of an application program, or that performs a setting operation, or the like. The particular page may be a pre-set page for the related person, and the particular page may include a control which, when triggered, triggers a video recording viewing operation; the setting operation may be an operation set in advance, such as a sliding operation in a set direction or a set path, or the like. In this embodiment, the application program may be an application program for presenting a video or a video recording, the video recording may be regarded as a recording photographed by the user in the form of a video, the content and number of the video recording is not limited, the user may perform shooting according to the actual situation, a recording period of the video recording may be flexibly set, for example, the recording period may be set to a day, a week, a month, or the like, and accordingly, the video recording may be a diary, a week, a month, or the like for shooting in the form of a video.

When the user performs a video recording viewing operation, the present embodiment may receive the video recording viewing operation in response thereto. The manner of receiving the video recording viewing operation is not limited, and for example, the video recording viewing operation triggered on the surface of the electronic device may be received through a touch detection module provided on the electronic device; instructions for the video recording viewing operation may also be defined within the application program, when the user performs the video recording viewing operation, the instructions are send, and the electronic device may analyze the instructions and receive the corresponding video recording viewing operation.

S 120: in response to the video recording viewing operation, displaying a personal recording page of a current user, and presenting video information of a plurality of first video recordings posted by the current user in the personal recording page according to a recording shooting theme.

The personal recording page may be a page relating to the video recording posted by the current user, the personal recording page may present video information of the first video recordings under different categories according to a recording shooting theme, for example, the personal recording page may present theme identifications of different recording shooting themes for the current user to view the respective video recording that were taken and posted by the current user using the respective recording shooting themes by triggering a theme identification; all the recording identification for triggering the viewing of all video recordings posted by the current user may also be presented. In addition, other information about the current user may be presented in the personal recording page, such as the total number of video recordings included in each recording shooting theme, the corresponding posted date of each video recording, and/or a collection video of several video recordings, without further expansion of the collection video.

A recording shooting theme may be considered a type of video recording, may include a tourism theme, a food-like theme, and/or a character-like theme, ect.; the first video recording may be a video recording posted by the current user; the video information is information contained in the first video recording, such as cover information, descriptive information, etc., the cover information is the color, pattern, etc. of the cover of the first video recording, and the descriptive information is text information, etc., for describing the first video recording.

Upon receipt of the video recording viewing operation, the personal recording page of the current user may be displayed in response to the video recording viewing operation, and all the record identification and the corresponding theme identification of the different recording shooting theme may be presented in the personal recording page to facilitate centralized or categorized viewing of the video information of the first video recording that the current user posted.

In addition, the current user may also perform various management operations on the plurality of first video recordings in the personal recording page, such as deletion or rights management of a single first video recording, batch deletion or batch rights management for the plurality of first video recordings, viewing of a certain first video recording, and the like.

The method for presenting the video recording provided by the embodiment of the present disclosure receives a video recording viewing operation; in response to the video recording viewing operation, displays a personal recording page of a current user, and presenting video information of a plurality of first video recordings posted by the current user in the personal recording page according to a recording shooting theme. With the above method, by displaying the personal recording page of the current user, the video information of all the first video recordings posted by the current user can be presented in the personal recording page according to the recording shooting theme, enabling the user to achieve a categorized viewing of all the first video recordings posted by the user in the personal recording page without having to find the video recordings by browsing the user's list of the posted videos, thereby reducing the operations required by the user to view the video recordings posted by the user and improving the user's experience.

FIG. 2 is a flowchart diagram of a method for presenting a video recording according to an embodiment two of the present disclosure, which is described on the basis of the plurality of alternatives in the above-mentioned the plurality of embodiments. In the present embodiment, the situation before the viewing operation of the received video recording is further described: playing a target first video recording in a video playing page, and displaying a preset page switching control corresponding to the target first video recording, wherein the target first video recording is a first video recording comprised within a video stream of the video playing page; or displaying a detail page of a target first video recording, and displaying a preset page switching control corresponding to the target first video recording in the detail page; or displaying a video recording page, and displaying the preset page switching control in the video recording page.

Please refer to the first embodiment for details of the present embodiment.

As shown in FIG. 2, the method for presenting the video recording provided by the present embodiment may include the following steps.

S210: playing a target first video recording in a video playing page, and displaying a preset page switching control corresponding to the target first video recording, wherein the target first video recording is a first video recording comprised within a video stream of the video playing page.

The video playing page may be understood as a page showing a video or a video recording, the video playing page may include one or more pages, such as the video playing page may include a playing page recommended by the application program, and may also include other video playing pages other than the recommended playing page, such as a follow page, which is a page showing videos (including the video recording and a non-video recording) posted by other users that the current user follows; the video stream may be considered as a video playing page in which the plurality of videos (including the video recording and the non-video recording) are arranged in sequential order, in which case the target first video recording is the first video recording contained within the video stream.

In the present embodiment, before the viewing operation of the video recording is received, the target first video recording can be played in the video playing page, and the preset page switching control corresponding to the target first video recording is displayed, when it is detected that the preset page switching control in the video playing page is triggered, it can be considered that the video recording viewing operation is received.

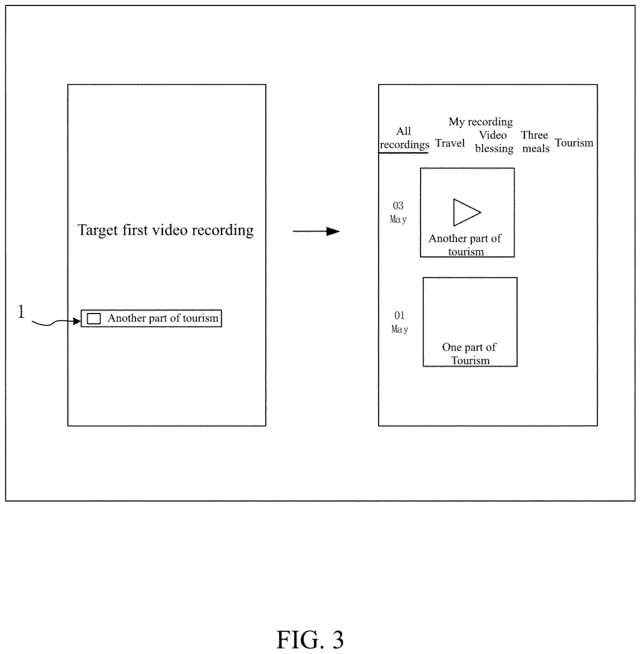

FIG. 3 is a is a schematic diagram of an interaction scenario according to the second embodiment of the present disclosure, as shown in FIG. 3, when a target first video recording is played in a video playing page, a preset page switching control 1 corresponding to the target first video recording is displayed in the video playing page, when a user triggers the preset page switching control 1, a personal recording page of a current user can be displayed.

S220: displaying a detail page of a target first video recording, and displaying a preset page switching control corresponding to the target first video recording in the detail page.

The detail page may refer to a page for presenting detail information of the target first video recording, for example, the detail information may include comment information of the target first video recording, including the comment user and comment content, and the like.

Likewise, a detail page of the target first video recording may be displayed before receiving the video recording viewing operation, a preset page switching control corresponding to the target first video recording may be displayed in the detail page, and likewise, when the preset page switching control in the video playing page is detected to be triggered, it may be considered that the video recording viewing operation has been received.

In both cases, when the video recording viewing operation is performed, it is possible to receive and in response to the video recording viewing operation, switch into the personal recording page and locate to this target first video recording. The display position and form of the preset page switching control is not limited in either case, as may be located in text form at a blank area in the target first video recording.

S230: displaying a video recording page, and displaying the preset page switching control in the video recording page.

The video recording page may be a page showing a video recording scene, e.g., the video recording page may include a first area, which may be an entrance area of the personal recording page, a second area, which may be an associated area showing a calendar, and/or a presentation area of different recording shooting themes, which may be an area where the different recording shooting themes are selected for shooting. The preset page switching control may then refer to a control for switching to a personal recording page.

Before receiving the video recording viewing operation, the video recording page may also be displayed, and the preset page switching control is displayed in the video recording page, and the specific number of the preset page switching controls is not limited and may be one or more. When it is detected that the preset page switching control in the video recording page is triggered, it is considered that the video recording viewing operation is received.

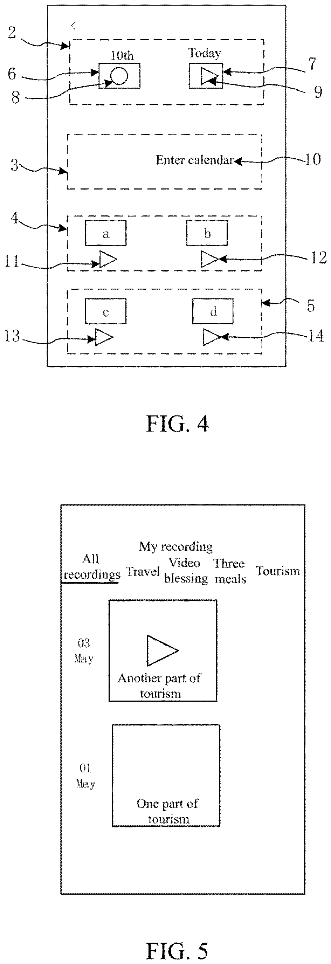

FIG. 4 is a schematic diagram of a video recording page according to the second embodiment of the present disclosure (taking video recording as a video diary as an example in FIG. 4). As shown in FIG. 4, the video recording page may include a card playing area 2 (i.e., a second area), a personal diary entry area 3 (i.e., a first area), a daily living recording theme area 4 (i.e., an area showing different recording shooting themes), and a same-shot challenge area 5 (i.e., an area showing different shooting effects).

The second area 2 displays a shooting calendar containing a calendar area 6 in which a second preset page control 8 is displayed and a calendar area 7 in which a second preset page control 9 is displayed; the personal diary entry enclave 3 displays a first preset page switching control 10. A first shooting control 11 corresponding to a recording shooting theme a and a first shooting control 12 corresponding to a recording shooting theme b are displayed in the daily living recording theme area 4; a second shooting control 13 corresponding to the shooting effect c and the second shooting control 14 corresponding to the shooting effect d are displayed in the same-shot challenge area 5.

Meanwhile, the video recording page also supports sliding up and down. When sliding up, the personal diary entry area 3 can be put away to the upper right corner, and the card playing area 2 can be put away to show only the date and shooting status.

S240: receiving a video recording viewing operation.

S250: in response to the video recording viewing operation, displaying a personal recording page of a current user, and presenting video information of a plurality of first video recordings posted by the current user in the personal recording page according to a recording shooting theme.

In the present embodiment, the first video recordings may be aggregated in timeline and theme categorization through the personal recording page, thereby providing the ability for users to review and manage video recordings. Also, the personal diary page (i.e., personal recording page) can be entered from both the video recording page and an anchor point (i.e., the preset page switching control) in the posted first video recording.

FIG. 5 is a schematic diagram of a personal recording page according to the second embodiment of the present disclosure (using video recordings as a video diary in FIG. 5). As shown in FIG. 5, a recording shooting theme of "All Recordings" may be set top and selected by default; the plurality of video recordings are presented in reverse order of posted time in the plurality of theme recording category (i.e., recording shooting theme); By default showing theme identifications of a preset number (e.g., 4) of recording shooting theme, when the number of recording shooting theme is greater than 4, theme identifications of other recording shooting theme may be shown based on the current user's operation of sliding to the left. Whereby the current user can view the theme identification of more recording shooting theme by sliding horizontally; and all first video recordings under a certain recording shooting theme can be viewed by clicking on the theme identification of that recording shooting theme.

In this embodiment, only theme identifications corresponding to recording shooting theme for which the current user posted a first video recording of the corresponding recording shooting theme and for which the video recording was not deleted by the current user may be presented in the personal recording page; if the current user has never posted a first video recording using a recording shooting theme, or if the user's posted video recording using the recording shooting theme has been completely deleted, the theme identification of the recording shooting theme may not be presented in the personal recording page.

The second embodiment of present disclosure provides a method for presenting the video recording, by setting a preset page switching control in a video playing page, a detail page or a video recording page, which can enable to trigger an execution of the video recording viewing operation, thereby providing a basis for displaying the personal recording page.

In an implementation, the displaying the preset page switching control in the video recording page comprises: displaying a first preset page switching control in a first area of the video recording page, displaying a shooting calendar in a second area of the video recording page, and displaying each second preset page switching control in a calendar area corresponding to a posted date according to the posted date of at least one first video recording in the plurality of first video recordings associated with each second preset page switching control in a plurality of second preset page switching controls, wherein the shooting calendar comprises at least two calendar areas, different calendar areas corresponding to different posted dates.

The first preset page switching control may be considered as a preset page switching control within the first region. The shooting calendar refers to an associated area of posted dates corresponding to the plurality of first video recordings. The shooting calendar may comprise at least two calendar areas, different calendar areas corresponding to different posted dates. The at least two calendar areas may be arranged in chronological order in the second area, wherein each calendar area may comprise information relating to the corresponding posted date, such as the posted date, a corresponding second preset page switching control and a cover of the first video recording to which the second preset page switching control is associated. The second preset page switching control may be considered as the preset page switching control associated with the first video recording in the second area.

It is contemplated that the personal recording page may be switched into when the first preset page switching control is triggered; and when the second preset page switching control is triggered, the video information of the first video recording corresponding to the second preset page switching control triggered by the current user may be positioned while switching into the personal recording page, i.e., the video information of the first video recording associated with the second preset page switching control triggered by the current user may be moved into the display area of the personal recording page for display.

In an implementation, each of the at least two calendar areas is further used for displaying virtual item information associated with a first video recording posted by the current user on a posted date corresponding to each calendar area among the plurality of first video recordings.

The virtual item information may be information of an item that exists in a virtual form, such as a gold coin or the like. In the present step, the calendar area is further used to display the virtual item information associated with the first video recording posted by the current user on the corresponding posted date of the calendar area. The displayed virtual item information may be the number of virtual item information that has been posted to the current user's account, or the number of virtual item information that has not yet been collected by the current user and needs to be collected by shooting a video recording, and different virtual item information may exist in different forms, such as the virtual item information that has been collected may be in a shadow state, and the virtual item information that has not yet been collected may be in a normal state.

In addition, the display of the virtual item information may be differentiated such that the virtual item information associated with the first video recording may be displayed in the corresponding calendar area as soon as the task of shooting the video recording is completed, or that the virtual item information associated with the first video recording may be displayed in the calendar area only if the task of shooting the video recording is completed in a particular page and may be not displayed in the calendar area if the task of shooting a video recording is completed through other pages. The specific page and the other pages may be set according to actual circumstances and are not further developed here.

In an implementation, the plurality of first shooting controls corresponding to different recording shooting themes are also displayed in the video recording page, the method further comprising: displaying a video recording shooting page in response to a trigger operation for a target first shooting control among the plurality of first shooting controls, and displaying shooting prompt information of a target recording shooting theme in the video recording shooting page, wherein the target recording shooting theme is a recording shooting theme corresponding to the target first shooting control.

The first shooting control can be a shooting control corresponding to a recording shooting theme, for triggering the display of the video recording shooting page; the video recording shooting page may be understood as a page where the video recording is shot. The form and position of the first shooting control are not limited here, for example, the first shooting control may be expressed in the form of words or in the form of patterns.

The shooting prompt information may be information related to the target recording shooting theme, such as the name of the target recording shooting theme, and the like. The target first shooting control is the first shooting control triggered by the current user, which may be any one of the plurality of first shooting controls, and the target recording shooting theme is the recording shooting theme corresponding to the target first shooting control.

Different recording shooting theme can also be displayed in the video recording page, each recording shooting theme has its corresponding first shooting control, when it is detected that a certain first shooting control is triggered by the current user, the first shooting control triggered by the current user can be taken as a target first shooting control, the video recording shooting page can be displayed, and the shooting prompt information of the target recording shooting theme corresponding to the target first shooting control is displayed in the video recording shooting page; the video recording may be subsequently shot in the shooting page based on the corresponding shooting operation of the current user.

In an implementation, the plurality of second shooting controls corresponding to different shooting effects are also displayed in the video recording page, the method further comprising: displaying a video recording shooting page in response to a trigger operation for a target second shooting control among the plurality of second shooting controls, and displaying a preview picture of a target shooting effect in the video recording shooting page, wherein the target shooting effect is a shooting effect corresponding to the target second shooting control.

The second shooting control may be a shooting control corresponding to a shooting effect, for triggering displaying a video recording shooting page; the second shooting control and the first shooting control are only used to distinguish different objects, and the present embodiment does not limit the form and position of the second shooting control, and may be set according to an actual page situation. The target second shooting control is the second shooting control triggered by the current user, which may be any one of the second shooting controls, the target shooting effect is the shooting effect corresponding to the target second shooting control; the preview picture may be a picture for previewing a shooting effect of the target shooting effect, which may be obtained by processing a video picture captured by a camera using the target shooting effect.

Different shooting effects may be further displayed in the video recording page, each shooting effect having its corresponding second shooting effect, and when it is detected that a second shooting control is triggered by the current user, the second shooting control triggered by the current user may be taken as a target second shooting control, the video recording shooting page may be displayed, and a preview picture of the target shooting effect corresponding to the target second shooting control may be displayed in the shooting page; the video recording may then be shot in the shooting page based on the corresponding shooting operation of the current user.

It needs to be explained that when the shooting of the video recording is performed at the shooting page after the target recording shooting theme or the target shooting effect is selected, the selected recording shooting theme or the target shooting effect can also be switched in the shooting page to perform the switching of the target recording shooting theme or the target shooting effect.

In an implementation, the displaying a video recording page, and displaying a preset page switching control in the video recording page, comprises: displaying the video recording page and displaying the preset page switching control in the video recording page in response to a video recording page display operation, wherein the video recording page display operation acts within a shooting task page or acts within a personal homepage of the current user.

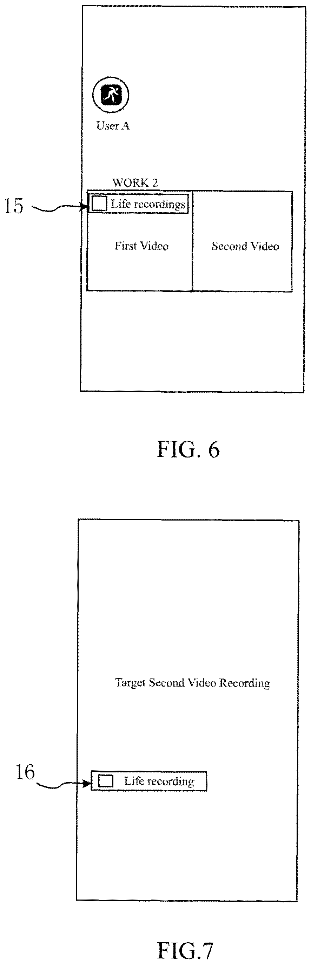

The shooting task page may be understood as an interface for displaying shooting tasks of video recordings, the video recording shooting task may be understood as being capable of acquiring a corresponding number of virtual item information by shooting a specific number of video recordings, and it may be understood that other shooting tasks unrelated to the video recording may also be displayed in the shooting task page. The personal homepage may be a page that presents information for the current user, such as may include a user nickname, user introduction information, or video information for all videos posted. In the list of posted videos presented by the current user's personal homepage, the video recordings may carry recording theme hashtags 15 to distinguish between video recordings and non-video recordings (i.e., videos other than video recordings). FIG. 6 is a schematic diagram of a personal homepage according to the second embodiment of the present disclosure. As shown in FIG. 6, the first video is a video recording, the second video is a non-video recording, and a recording theme hashtag 15 is added to an upper left corner of the first video to be distinguished from the second video.

In the above embodiment, the video recording page may be displayed based on the video recording page display operation performed by the user within the shooting task page or the personal homepage of the current user, and the preset page switching control may be displayed in the video recording page. Performing the video recording page display operation may be limited, such as by triggering a set control to perform the video recording page display operation, or the like.

In an implementation, a third shooting control is also displayed in the personal recording page, and the third shooting control is used for triggering a display of a video recording shooting page.

The third shooting control may be a control for triggering the display of a video recording shooting page in the personal recording page, and the first shooting control, the second shooting control, the third shooting control and the fourth shooting control are only used to distinguish different sitting pages, and the present embodiment is not limited to this case, i.e., it may be set according to the actual sitting page.

In an implementation, the method for presenting the video recordings provided by the present embodiment further comprises: playing a second video recording in the video playing page and displaying a fourth shooting control corresponding to the second video recording, wherein the second video recording is posted by a user other than the current user, the second video recording is comprised within a video stream of the video playing page, and the fourth shooting control is used to triggering a display of a video recording shooting page.

The second video recording may be a video recording posted by other users than the current user, which may be friends of the current user, people who follow, and/or users who are not cognitively aware, and the like. Specifically, the second video recording may be played in the video playing page and displayed with a fourth shooting control corresponding to the second video recording, and when it is detected that the current user triggers the fourth shooting control, the video recording shooting page may be displayed to shoot a video recording similar to the second video recording, such as the shot video recording may be the same as the recording shooting theme of the second video recording, may be the same as the shooting effect of the second video recording, etc.

FIG. 7 is a schematic diagram of a video playing page provided by the second embodiment of the present disclosure, as shown in FIG. 7, when a target second video recording is played in the video playing page, a fourth shooting control 16 corresponding to the target second video recording is displayed in the video playing page, when it is detected that a current user triggers the fourth shooting control 16, the video recording shooting page can be displayed for the current user to take shooting of the video recording at the shooting page.

In an implementation, video information of at least one target collection video corresponding to at least one aggregation period also displayed in the personal recording page, and each target collection video in the at least one target collection video is generated based on the first video recording posted by the current user in a corresponding aggregation period of each target collection video.

The aggregation period may refer to a period during which several first video recordings are synthesized into the target collection video, e.g., the aggregation period may be a month or a week, etc.; the target collection video may be a video that is ultimately generated based on a first video recording posted by the current user over in a corresponding aggregation period of the target collection video. The means of generating the target collection video is not limited, such as the target collection video may be generated directly from all the first video recordings posted by the current user within the corresponding aggregation period; original collections videos for respective aggregation periods may also be generated from the first video recordings posted by the current user within the respective aggregation periods, and then edited to generate the target collections videos.

In this step, the personal recording page may also display the video information of the target collection videos corresponding to at least one aggregation period. For example, when the aggregation period is one month and the current month is May, the personal recording page may display the video information of the target collection videos posted by the current user on April and before April. This embodiment does not limit the method of posting the target collection video, such as by way of a trigger control, or directly at some fixed point in time after the target collection video is generated.

In an implementation, the present embodiment provides the method for presenting the video recording further comprising: displaying a first posting control; displaying an editing page of an original collection video of a current aggregation period in response to a trigger operation for the first posting control, wherein the editing page is used for editing the original collection video; displaying a post page in response to the editing completion operation, wherein a second post control is displayed in the post page, and the second post control is used for triggering a post of a target collection video obtained by editing the original collection video.

The first posting control may be an initial control for posting the target collection video; the original collection video may refer to a video that is preliminarily synthesized based on the first video recording posted by the current user during the current aggregation period, the finally generated video, i.e., the target collection video, is generated by subsequent editing, and the editing page being the page where the original collection video is edited. The present embodiment is not described the step of determining the original collection video.

The posting page may refer to an interface for posting a target collection video with a second posting control displayed in the posting page for triggering posting of the target collection video edited to the original collection video.

In this embodiment, the first posting control may also be displayed, where the location and timing of the particular page displayed by the first posting control is not limited. Exemplary, the first posting control may be displayed in any area of the personal recording page and/or an area within the video recording page where the current month is displayed; when the aggregation period is one month, the first posting control may be displayed long during the aggregation period, or may be displayed for the first n (n is a positive integer) days at the beginning of the next month, and automatically disappear beyond n days.

It will be understood that the first posting control may be in the form of text or may be displayed in the form of a pop-up window, which may contain a closing control that the user may autonomously select to close or display.

When it is detected that the current user triggers the first posting control, the editing page of the original collection video may be displayed, and meanwhile, the current user may edit the original collection video of the current aggregation period within the editing page, and the posting page may be displayed in response to the editing completion operation of the current user after the editing is completed; and the target collection video edited by the current user is posted upon detecting that the current user triggers the second posting control in the posting page.

In an implementation, prior to said displaying the first posting control, further comprising: determining at least one first video recording to be synthesized according to recording information of the first video recording posted by the current user in a current aggregation period, wherein the recording information comprises at least one of duration information and interaction information; according to video picture information of the at least one first video recording to be synthesized, respectively intercepting highlight segments in the at least one first video recording to be synthesized; synthesizing all highlight segments to obtain an original collection video of the current aggregation period.

The recording information may refer to information included in the first video recording, such as duration information and/or interaction information, the duration information is the duration of the first video recording, and the interaction information may be understood as information related to the interaction received by the first video recording, such as the number of likes, the number of comments, the content of comments, and/or the number of relays.

The first video recordings to be synthesized may be understood as the plurality of first video recordings obtained by filtering the first video recordings posted by the current user during the current aggregation period. The filtering rules may be set by the relevant personnel, such as duration information greater than 10s and/or interaction information greater than 100 thousand relays.

In the above implementation, the original collection video for the current aggregation period may be generated directly based on the filtered first video recordings irrespective of the number of filtered first video recordings; the number range for synthesizing the original collection video may also be set in advance, and when the filtered out first video recordings to be synthesized do not satisfy less than the minimum number in the number range, the synthesizing of the original collection video for the current aggregation period and the displaying of the first posting control may not be performed; accordingly, when the filtered first video recordings to be synthesized exceed the maximum number in the range of numbers, the first video recordings to be synthesized may be filtered again (e.g., the latest posted time selected) based on the posted time at which the first video recordings to be synthesized are filtered to obtain first video recordings to synthesized that fit the range of numbers. The number range may be determined by empirical values, for example the number range may be 5-10.

The video picture information is the picture information included in the first video recording to be synthesized, such as character information, text information, and the like. Highlight segments may be considered video segments that reflect important information in the first video recording to be synthesized.

It will be understood that the determination of the original collection video is also required before displaying the first posting control. The step of determining may be described as the following: firstly, the at least one of first video recordings to be synthesized may be determined on the basis of the recording information of the first video recordings posted by the current user during the current aggregation period. The highlight segments in the at least one of the first video recordings to be synthesized are then respectively intercepted based on the determined video picture information in the at least one of the first video recordings to be synthesized, wherein the means for intercepting the highlight segments is not limited, e.g., the first video recordings to be synthesized may be input into a model to obtain the corresponding highlight segments, the highlight segments may be selected based on the video picture information as highlight segments, etc. Finally, after obtaining the corresponding highlight segments for the at least one of the first video recordings to be synthesized, all highlight segment can be synthesized to obtain the original collection video for the current aggregation period. The synthesizing step is not limited here, such as the synthesizing may be performed sequentially in the chronological order of the highlight segments, or the original collection video may be synthesized according to the degree of video correlation of the highlight segments.

Illustratively, the present embodiment may aggregate video recordings posted by users into a periodic album (i.e., target collection video) at a certain period (i.e., aggregation period), make a video work such as annual/monthly recall, and guide the periodic collection production by recording square dynamic pop-up, personal recording page fixed display position.

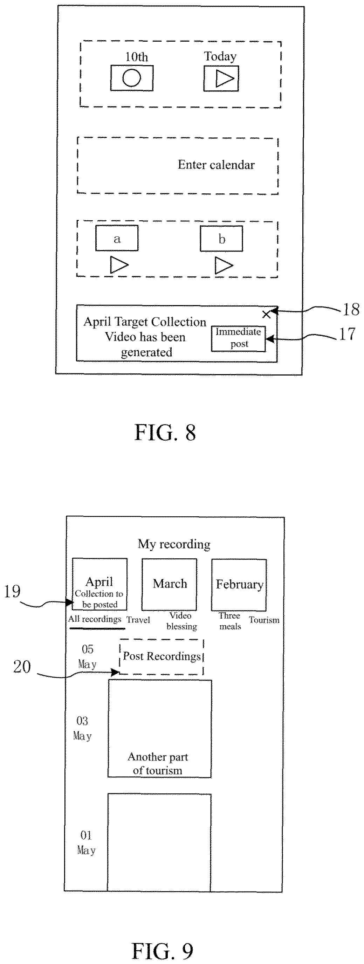

FIG. 8 is a schematic diagram of another video recording page according to the second embodiment of the present disclosure. As shown in FIG. 8, a pop-up 17 (i.e., a first posting control) is displayed in the video recording page, and when the first posting control 17 is triggered, an editing page of an original collection video can be displayed to obtain a target collection video. The user may actively click on the close control 18 that directs the pop-up window to close the pop-up window. In addition, the display of the pop-up window may be automatically canceled when the album is posted successfully or after the display period of the pop-up window is exceeded (e.g., 00:00 on the first day of the month to 23:59 on the third day of the month).

FIG. 9 is a schematic diagram of another personal recording page according to the second embodiment of the present disclosure. As shown in FIG. 9, the personal recording page displays video information of collection videos corresponding to two aggregation periods, respectively, which is album corresponding to March and February, and the personal recording page displays a first posting control 19, and the album corresponding to April can be post by triggering the first posting control 19. The display of the first posting control 19 may also be automatically canceled when the album of April is successful posted or after the display period of the first posting control 19 is exceeded (e.g., 00:00 on the first day of the month to 23:59 on the third day of the month). In addition, a third shooting control 20 is also displayed in the personal recording page, the user being able to trigger the video recording shooting page by clicking on the third shooting control 20.

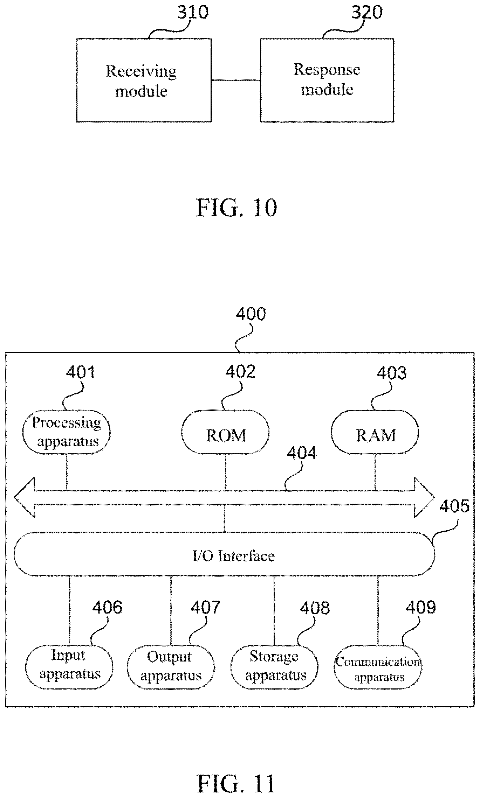

FIG. 10 is a block diagram of a structure of an apparatus for presenting a video recording according to a third embodiment of the present disclosure, which is applicable to the case of presenting the video recording, wherein the apparatus may be implemented by software and/or hardware, and is generally integrated on an electronic device.

As shown in FIG. 10, the display apparatus of video recording provided by the present embodiment may comprise: a receiving module 310, configured to receive a video recording viewing operation; a response module 320, configured to in response to the video recording viewing operation, displaying a personal recording page of a current user, and presenting video information of a plurality of first video recordings posted by the current user in the personal recording page according to a recording shooting theme.

The present embodiment provides an apparatus for presenting a video recording, a video recording viewing operation is received through the receiving module 310; the personal recording page of the current user is displayed by the response module 320 in response to the video recording viewing operation, and the video information of the plurality of first video recordings posted by the current user is presented in the personal recording page according to the recording shooting theme. With this apparatus, by displaying the personal recording page of the current user, the video information of each first video recording posted by the current user can be presented in the personal recording page according to the recording shooting theme, thereby enabling the user to achieve a categorized viewing of the plurality of first video recordings posted by the user in the personal recording page without having to find the video recording by browsing the user's list of posted videos, thereby reducing the operations required by the user to view the user's posted video recording and improving the user's experience.

The recording viewing operation acts on a preset page switching control, and the present embodiment provides the apparatus for presenting a video recording further comprising: a first displaying module, configured to, before receiving a video recording viewing operation, play a target first video recording in a video playing page, and display a preset page switching control corresponding to the target first video recording, wherein the target first video recording is a first video recording comprised within a video stream of the video playing page; or a second displaying module, configured to, before receiving a video recording viewing operation, display a detail page of a target first video recording, and display a preset page switching control corresponding to the target first video recording in the detail page; or a third display module, configured to, before receiving a video recording viewing operation, display video recording page, and display the preset page switching control in the video recording page.

The third display module is configured to: display a first preset page switching control in a first area of the video recording page, display a shooting calendar in a second area of the video recording page, and display each second preset page switching control in a calendar area corresponding to a posted date according to the posted date of at least one first video recording in the plurality of first video recordings associated with each second preset page switching control in a plurality of second preset page switching controls, wherein the shooting calendar comprises at least two calendar areas, different calendar areas corresponding to different posted dates.

Each of the at least two calendar areas is further used for displaying virtual item information associated with a first video recording posted by the current user on a posted date corresponding to each calendar area among the plurality of first video recordings.

The plurality of first shooting controls corresponding to different recording shooting themes are also displayed in the video recording page, and the present embodiment provides the apparatus for presenting a video recording further comprising: a fourth display module, configured to, display video recording shooting page in response to a trigger operation for a target first shooting control among the plurality of first shooting controls, and display shooting prompt information of a target recording shooting theme in the video recording shooting page, wherein the target recording shooting theme is a recording shooting theme corresponding to the target first shooting control.

A plurality of second shooting controls corresponding to different shooting effects are also displayed in the video recording page, and the present embodiment provides the apparatus for presenting a video recording further comprising: a fifth displaying module, configured to, display a video recording shooting page in response to a trigger operation for a target second shooting control among the plurality of second shooting controls, and display a preview picture of a target shooting effect in the video recording shooting page, wherein the target shooting effect is a shooting effect corresponding to the target second shooting control.

The third display module is configured to: displaying the video recording page and displaying the preset page switching control in the video recording page in response to a video recording page display operation, wherein the video recording page display operation acts within a shooting task page or acts within a personal homepage of the current user.

A third shooting control is also displayed in the personal recording page, and the third shooting control is used for triggering a display of a video recording shooting page.

Further, the present embodiment provides an apparatus for presenting a video recording further comprising:
a playing module, configured to play a second video recording in the video playing page and display a fourth shooting control corresponding to the second video recording, wherein the second video recording is posted by a user other than the current user, the second video recording is comprised within a video stream of the video playing page, and the fourth shooting control is used to triggering a display of a video recording shooting page.

Video information of at least one target collection video corresponding to at least one aggregation period also displayed in the personal recording page, and each target collection video in the at least one target collection video is generated based on the first video recording posted by the current user in a corresponding aggregation period of each target collection video.

The present embodiment provides the apparatus for presenting a video recording further comprising: a sixth display module, configured to display a first posting control; a seventh display module, configured to display an editing page of an original collection video of a current aggregation period in the at least one aggregation period in response to a trigger operation for the first posting control, wherein the editing page is used for editing the original collection video; an eighth display module, configured to display a post page in response to the editing completion operation, wherein a second post control is displayed in the post page, and the second post control is used for triggering a post of a target collection video obtained by editing the original collection video.

The present embodiment provides an apparatus for presenting a video recording further comprising: a determining module configured to before displaying the first posting control, determine at least one first video recording to be synthesized according to recording information of the first video recording posted by the current user in a current aggregation period in the at least one aggregation period, wherein the recording information comprises at least one of duration information and interaction information; an intercepting module configured to according to video picture information of the at least one first video recording to be synthesized, respectively intercept highlight segments in the at least one first video recording to be synthesized; a synthesizing module configured to synthesize all highlight segments to obtain an original collection video of the current aggregation period.

The apparatus for presenting the video recording described above may execute the method for presenting the video recording provided by any of the embodiments of the present disclosure, with the functional modules and advantageous effects corresponding to the execution method.

FIG. 11 is specifically referred below, and it shows the structure schematic diagram suitable for achieving the electronic device 400 in the embodiment of the present disclosure. The electronic device 400 in the embodiment of the present disclosure may include but not be limited to a mobile terminal such as a mobile phone, a notebook computer, a digital broadcasting receiver, a personal digital assistant (PDA), a PAD (tablet computer), a portable multimedia player (PMP), a vehicle terminal (such as a vehicle navigation terminal), and a fixed terminal such as a digital television (TV) and a desktop computer. The electronic device 400 shown in FIG. 11 is only an example and should not impose any limitations on the functions and use scopes of the embodiments of the present disclosure.

As shown in FIG. 11, the electronic device 400 may include a processing apparatus (such as a central processing unit, and a graphics processor) 401, it may execute various appropriate actions and processes according to a program stored in a read-only memory (ROM) 402 or a program loaded from a storage apparatus 408 to a random access memory (RAM) 403. In RAM 403, various programs and data required for operations of the electronic device 400 are also stored. The processing apparatus 401, ROM 402, and RAM 403 are connected to each other by a bus 404. An input/output (I/O) interface 405 is also connected to the bus 404.

Typically, the following apparatuses may be connected to the I/O interface 405: an input apparatus 406 such as a touch screen, a touchpad, a keyboard, a mouse, a camera, a microphone, an accelerometer, and a gyroscope; an output apparatus 407 such as a liquid crystal display (LCD), a loudspeaker, and a vibrator; a storage apparatus 408 such as a magnetic tape, and a hard disk drive; and a communication apparatus 409. The communication apparatus 409 may allow the electronic device 400 to wireless-communicate or wire-communicate with other devices so as to exchange data. Although FIG. 11 shows the electronic device 400 with various apparatuses, it should be understood that it is not required to implement or possess all the apparatuses shown. Alternatively, it may implement or possess the more or less apparatuses.

According to the embodiment of the present disclosure, the process described above with reference to the flow diagram may be achieved as a computer software program. For example, an embodiment of the present disclosure includes a computer program product, it includes a computer program loaded on a non-transient computer-readable medium, and the computer program contains a program code for executing the method shown in the flow diagram. In such an embodiment, the computer program may be downloaded and installed from the network by the communication apparatus 409, or installed from the storage apparatus 408, or installed from ROM 402. When the computer program is executed by the processing apparatus 401, the above functions defined in the embodiments of the present disclosure are executed.

It should be noted that the above computer-readable medium in the present disclosure may be a computer-readable signal medium, a computer-readable storage medium, or any combinations of the two. The computer-readable storage medium may be, for example, but not limited to, a system, an apparatus or a device of electricity, magnetism, light, electromagnetism, infrared, or semiconductor, or any combinations of the above. More specific examples of the computer-readable storage medium may include but not be limited to: an electric connector with one or more wires, a portable computer magnetic disk, a hard disk drive, a random access memory (RAM), a read-only memory (ROM), an erasable programmable read-only memory (EPROM or flash memory), an optical fiber, a portable compact disk read-only memory (CD-ROM), an optical storage device, a magnetic storage device or any suitable combinations of the above. In the present disclosure, the computer-readable storage medium may be any visible medium that contains or stores a program, and the program may be used by an instruction executive system, apparatus or device or used in combination with it. In the present disclosure, the computer-readable signal medium may include a data signal propagated in a baseband or as a part of a carrier wave, it carries the computer-readable program code. The data signal propagated in this way may adopt various forms, including but not limited to an electromagnetic signal, an optical signal, or any suitable combinations of the above. The computer-readable signal medium may also be any computer-readable medium other than the computer-readable storage medium, and the computer-readable signal medium may send, propagate, or transmit the program used by the instruction executive system, apparatus or device or in combination with it. The program code contained on the computer-readable medium may be transmitted by using any suitable medium, including but not limited to: a wire, an optical cable, a radio frequency (RF) or the like, or any suitable combinations of the above.

In some implementation modes, a client and a server may be communicated by using any currently known or future-developed network protocols such as a HyperText Transfer Protocol (HTTP), and may interconnect with any form or medium of digital data communication (such as a communication network). Examples of the communication network include a local area network ("LAN"), a wide area network ("WAN"), an internet work (such as the Internet), and an end-to-end network (such as an ad hoc end-to-end network), as well as any currently known or future-developed networks.

The above-mentioned computer-readable medium may be included in the above-mentioned electronic device; it may also be present separately and not incorporated into the electronic device.

The computer-readable medium carrying one or more programs that, when executed by the electronic device, cause the electronic device to: receive a video recording viewing operation; in response to the video recording viewing operation, display a personal recording page of a current user, and present video information of a plurality of first video recordings posted by the current user in the personal recording page according to a recording shooting theme.

The computer program code for executing the operation of the present disclosure may be written in one or more programming languages or combinations thereof, the above programming language includes but is not limited to object-oriented programming languages such as Java, Smalltalk, and C++, and also includes conventional procedural programming languages such as a "C" language or a similar programming language. The program code may be completely executed on the user's computer, partially executed on the user's computer, executed as a standalone software package, partially executed on the user's computer and partially executed on a remote computer, or completely executed on the remote computer or server. In the case involving the remote computer, the remote computer may be connected to the user's computer by any types of networks, including LAN or WAN, or may be connected to an external computer (such as connected by using an internet service provider through the Internet).

The flow diagrams and the block diagrams in the drawings show possibly achieved system architectures, functions, and operations of systems, methods, and computer program products according to various embodiments of the present disclosure. At this point, each box in the flow diagram or the block diagram may represent a module, a program segment, or a part of a code, the module, the program segment, or a part of the code contains one or more executable instructions for achieving the specified logical functions. It should also be noted that in some alternative implementations, the function indicated in the box may also occur in a different order from those indicated in the drawings. For example, two consecutively represented boxes may actually be executed basically in parallel, and sometimes it may also be executed in an opposite order, this depends on the function involved. It should also be noted that each box in the block diagram and/or the flow diagram, as well as combinations of the boxes in the block diagram and/or the flow diagram, may be achieved by using a dedicated hardware-based system that performs the specified function or operation, or may be achieved by using combinations of dedicated hardware and computer instructions.

The involved units described in the embodiments of the present disclosure may be achieved by a mode of software, or may be achieved by a mode of hardware. Herein, the name of the unit does not constitute a limitation for the unit itself in some cases.

The functions described above in this article may be at least partially executed by one or more hardware logic components. For example, non-limiting exemplary types of the hardware logic component that may be used include: a field programmable gate array (FPGA), an application specific integrated circuit (ASIC), an application specific standard product (ASSP), a system on chip (SOC), a complex programmable logic device (CPLD) and the like.

In the context of the present disclosure, the machine-readable medium may be a visible medium, and it may contain or store a program for use by or in combination with an instruction executive system, apparatus, or device. The machine-readable medium may be a machine-readable signal medium or a machine-readable storage medium. The machine-readable medium may include but not limited to an electronic, magnetic, optical, electromagnetic, infrared, or semiconductor system, apparatus, or device, or any suitable combinations of the above. More specific examples of the machine-readable storage medium may include an electric connector based on one or more wires, a portable computer disk, a hard disk drive, RAM, ROM, EPROM (or a flash memory), an optical fiber, CD-ROM, an optical storage device, a magnetic storage device, or any suitable combinations of the above.

In accordance with one or more embodiments of the present disclosure, example 1 provides a method for presenting a video recording, comprising: receiving a video recording viewing operation; in response to the video recording viewing operation, displaying a personal recording page of a current user, and presenting video information of a plurality of first video recordings posted by the current user in the personal recording page according to a recording shooting theme.

In accordance with one or more embodiments of the present disclosure, example 2 according to the method of example 1, the video recording viewing operation acts on a preset page switching control, and before receiving a video recording viewing operation, the method further comprises: playing a target first video recording in a video playing page, and displaying a preset page switching control corresponding to the target first video recording, wherein the target first video recording is a first video recording comprised within a video stream of the video playing page; or displaying a detail page of a target first video recording, and displaying a preset page switching control corresponding to the target first video recording in the detail page; or displaying a video recording page, and displaying the preset page switching control in the video recording page

In accordance with one or more embodiments of the present disclosure, example 3 according to the method of example 2, wherein the displaying the preset page switching control in the video recording page comprises: displaying a first preset page switching control in a first area of the video recording page, displaying a shooting calendar in a second area of the video recording page, and displaying each second preset page switching control in a calendar area corresponding to a posted date according to the posted date of at least one first video recording in the plurality of first video recordings associated with each second preset page switching control in a plurality of second preset page switching controls, wherein the shooting calendar comprises at least two calendar areas, different calendar areas corresponding to different posted dates.

In accordance with one or more embodiments of the present disclosure, example 4 according to the method of example 3, wherein each of the at least two calendar areas is further used for displaying virtual item information associated with a first video recording posted by the current user on a posted date corresponding to each calendar area among the plurality of first video recordings.

In accordance with one or more embodiments of the present disclosure, example 5 according to the method of example 2, wherein a plurality of first shooting controls corresponding to different recording shooting themes are also displayed in the video recording page, and the method further comprises: displaying a video recording shooting page in response to a trigger operation for a target first shooting control among the plurality of first shooting controls, and displaying shooting prompt information of a target recording shooting theme in the video recording shooting page, wherein the target recording shooting theme is a recording shooting theme corresponding to the target first shooting control.

In accordance with one or more embodiments of the present disclosure, example 6 according to the method of example 2, wherein a plurality of second shooting controls corresponding to different shooting effects are also displayed in the video recording page, and the method further comprises: displaying a video recording shooting page in response to a trigger operation for a target second shooting control among the plurality of second shooting controls, and displaying a preview picture of a target shooting effect in the video recording shooting page, wherein the target shooting effect is a shooting effect corresponding to the target second shooting control.

In accordance with one or more embodiments of the present disclosure, example 7 according to the method of example 2, wherein the displaying a video recording page and displaying a preset page switching control in the video recording page, comprises: displaying the video recording page and displaying the preset page switching control in the video recording page in response to a video recording page display operation, wherein the video recording page display operation acts within a shooting task page or acts within a personal homepage of the current user.

In accordance with one or more embodiments of the present disclosure, example 8 according to the method of example 1, wherein a third shooting control is also displayed in the personal recording page, and the third shooting control is used for triggering a display of a video recording shooting page.

In accordance with one or more embodiments of the present disclosure, example 9 according to the method of example 1, further comprising: playing a second video recording in the video playing page and displaying a fourth shooting control corresponding to the second video recording, wherein the second video recording is posted by a user other than the current user, the second video recording is comprised within a video stream of the video playing page, and the fourth shooting control is used to triggering a display of a video recording shooting page.

In accordance with one or more embodiments of the present disclosure, example 10 according to the method of examples 1-9, wherein video information of at least one target collection video corresponding to at least one aggregation period also displayed in the personal recording page, and each target collection video in the at least one target collection video is generated based on the first video recording posted by the current user in a corresponding aggregation period of each target collection video.

In accordance with one or more embodiments of the present disclosure, example 11 according to the method of example 10, the method further comprises: displaying a first posting control; displaying an editing page of an original collection video of a current aggregation period in the at least one aggregation period in response to a trigger operation for the first posting control, wherein the editing page is used for editing the original collection video; displaying a post page in response to the editing completion operation, wherein a second post control is displayed in the post page, and the second post control is used for triggering a post of a target collection video obtained by editing the original collection video.

In accordance with one or more embodiments of the present disclosure, example 12 according to the method of example 10, before displaying the first posting control, the method further comprises: determining at least one first video recording to be synthesized according to recording information of the first video recording posted by the current user in a current aggregation period in the at least one aggregation period, wherein the recording information comprises at least one of duration information and interaction information; according to video picture information of the at least one first video recording to be synthesized, respectively intercepting highlight segments in the at least one first video recording to be synthesized; synthesizing all highlight segments to obtain an original collection video of the current aggregation period.

In accordance with one or more embodiments of the present disclosure, example 13 provides an apparatus for presenting a video recording, comprising: a receiving module, configured to receive a video recording viewing operation; a response module, configured to in response to the video recording viewing operation, displaying a personal recording page of a current user, and presenting video information of a plurality of first video recordings posted by the current user in the personal recording page according to a recording shooting theme.

In accordance with one or more embodiments of the present disclosure, example 14 provides an electronic device, comprising: at least one processor; and a storage communicatively connected with the at least one processor; wherein, the storage stores a computer program executable by the at least one processor, the computer program being executed by the at least one processor to enable the at least one processor to perform the method for presenting the video recording according to any one of examples 1-12.

In accordance with one or more embodiments of the present disclosure, example 15 provides a computer-readable storage medium, storing computer instructions, wherein the computer instructions are used to, when executed by a processor, implement the method for presenting the video recording according to any of examples 1-12.

In accordance with one or more embodiments of the present disclosure, example 16 provides a computer program product, comprising a computer program, wherein the computer program, when executed by a processor, implements the method for presenting the video recording according to any of examples 1-12.

The foregoing are merely descriptions of the preferred embodiments of the present disclosure and the explanations of the technical principles involved. It will be appreciated by those skilled in the art that the scope of the disclosure involved herein is not limited to the technical solutions formed by a specific combination of the technical features described above, and shall cover other technical solutions formed by any combination of the technical features described above or equivalent features thereof without departing from the concept of the present disclosure. For example, the technical features described above may be mutually replaced with the technical features having similar functions disclosed herein (but not limited thereto) to form new technical solutions.

In addition, while operations have been described in a particular order, it shall not be construed as requiring that such operations are performed in the stated specific order or sequence. Under certain circumstances, multitasking and parallel processing may be advantageous. Similarly, while some specific implementation details are included in the above discussions, these shall not be construed as limitations to the present disclosure. Some features described in the context of a separate embodiment may also be combined in a single embodiment. Rather, various features described in the context of a single embodiment may also be implemented separately or in any appropriate sub-combination in a plurality of embodiments.

## Claims

1. A method for presenting a video recording, comprising:
receiving a video recording viewing operation;
in response to the video recording viewing operation, displaying a personal recording page of a current user, and presenting video information of a plurality of first video recordings posted by the current user in the personal recording page according to a recording shooting theme.

2. The method according to claim 1, wherein the video recording viewing operation acts on a preset page switching control, and before receiving a video recording viewing operation, the method further comprises:
playing a target first video recording in a video playing page, and displaying a preset page switching control corresponding to the target first video recording, wherein the target first video recording is a first video recording comprised within a video stream of the video playing page; or
displaying a detail page of a target first video recording, and displaying a preset page switching control corresponding to the target first video recording in the detail page; or
displaying a video recording page, and displaying the preset page switching control in the video recording page.

3. The method according to claim 2, wherein the displaying the preset page switching control in the video recording page comprises:
displaying a first preset page switching control in a first area of the video recording page, displaying a shooting calendar in a second area of the video recording page, and displaying each second preset page switching control in a calendar area corresponding to a posted date according to the posted date of at least one first video recording in the plurality of first video recordings associated with each second preset page switching control in a plurality of second preset page switching controls, wherein the shooting calendar comprises at least two calendar areas, different calendar areas corresponding to different posted dates.

4. The method according to claim 3, wherein each of the at least two calendar areas is further used for displaying virtual item information associated with a first video recording posted by the current user on a posted date corresponding to each calendar area among the plurality of first video recordings.

5. The method according to claim 2, wherein a plurality of first shooting controls corresponding to different recording shooting themes are also displayed in the video recording page, and the method further comprises:
displaying a video recording shooting page in response to a trigger operation for a target first shooting control among the plurality of first shooting controls, and displaying shooting prompt information of a target recording shooting theme in the video recording shooting page, wherein the target recording shooting theme is a recording shooting theme corresponding to the target first shooting control.

6. The method according to claim 2, wherein a plurality of second shooting controls corresponding to different shooting effects are also displayed in the video recording page, and the method further comprises:
displaying a video recording shooting page in response to a trigger operation for a target second shooting control among the plurality of second shooting controls, and displaying a preview picture of a target shooting effect in the video recording shooting page, wherein the target shooting effect is a shooting effect corresponding to the target second shooting control.

7. The method according to claim 2, wherein the displaying a video recording page and displaying a preset page switching control in the video recording page, comprises:
displaying the video recording page and displaying the preset page switching control in the video recording page in response to a video recording page display operation, wherein the video recording page display operation acts within a shooting task page or acts within a personal homepage of the current user.

8. The method according to claim 1, wherein a third shooting control is also displayed in the personal recording page, and the third shooting control is used for triggering a display of a video recording shooting page.

9. The method according to claim 1, further comprising:
playing a second video recording in the video playing page and displaying a fourth shooting control corresponding to the second video recording, wherein the second video recording is posted by a user other than the current user, the second video recording is comprised within a video stream of the video playing page, and the fourth shooting control is used to triggering a display of a video recording shooting page.

10. The method according to any one of claims 1-9, wherein video information of at least one target collection video corresponding to at least one aggregation period also displayed in the personal recording page, and each target collection video in the at least one target collection video is generated based on the first video recording posted by the current user in a corresponding aggregation period of each target collection video.

11. The method according to claim 10, further comprising:
displaying a first posting control;
displaying an editing page of an original collection video of a current aggregation period in the at least one aggregation period in response to a trigger operation for the first posting control, wherein the editing page is used for editing the original collection video;
displaying a post page in response to the editing completion operation, wherein a second post control is displayed in the post page, and the second post control is used for triggering a post of a target collection video obtained by editing the original collection video.

12. The method according to claim 10, before displaying the first posting control, further comprising:
determining at least one first video recording to be synthesized according to recording information of the first video recording posted by the current user in a current aggregation period in the at least one aggregation period, wherein the recording information comprises at least one of duration information and interaction information;
according to video picture information of the at least one first video recording to be synthesized, respectively intercepting highlight segments in the at least one first video recording to be synthesized;
synthesizing all highlight segments to obtain an original collection video of the current aggregation period.

13. An apparatus for presenting a video recording, comprising:
a receiving module, configured to receive a video recording viewing operation;
a response module, configured to in response to the video recording viewing operation, displaying a personal recording page of a current user, and presenting video information of a plurality of first video recordings posted by the current user in the personal recording page according to a recording shooting theme.

14. An electronic device, comprising:
at least one processor; and
a storage communicatively connected with the at least one processor; wherein,
the storage stores a computer program executable by the at least one processor, the computer program being executed by the at least one processor to enable the at least one processor to perform the method for presenting the video recording according to any one of claims 1-12.

15. A computer-readable storage medium, storing computer instructions, wherein the computer instructions are used to, when executed by a processor, implement the method for presenting the video recording according to any of claims 1-12.

16. A computer program product, comprising a computer program, wherein the computer program, when executed by a processor, implements the method for presenting the video recording according to any of claims 1-12.
